# EUROPEAN PATENT SPECIFICATION

(11) **EP 1 055 485 B1**
(45) Date of publication and mention of the grant of the patent: **24.03.2004**
(21) Application number: 00830327.3
(22) Date of filing: 05.05.2000
(51) Int. Cl.: B23Q 39/04, B23Q 1/66, B23Q 7/14, B23Q 39/02

(54) **Machine tool for machining symmetrical elongate elements such as constructional members for chairs, furniture or other such items**
Werkzeugmaschine zum Bearbeiten von länglichen symmetrischen Gegenständen sowie Bauteilen von Stühlen, Möbeln und anderen ähnlichen Gegenständen
Machine-outil pour l'usinage d'objets de forme allongée et symétrique tels que d'éléments de construction pour chaises, meubles et autres éléments analogues

(30) Priority: 07.05.1999 IT FI990106
(43) Date of publication of application: 29.11.2000
(73) Proprietor: Bacci Paolino Di Giuseppe Bacci Di Agostino Bacci, 56021 Cascina, Pisa (IT)
(72) Inventor: Ruggieri, Alberto, 56025 Pontedera, Pisa (IT)
(74) Representative: Mannucci, Michele

(56) References cited:
- EP-A- 0 509 972
- EP-A- 0 873 817
- DD-A- 120 146
- DE-A- 3 921 042
- DE-A- 4 430 113
- GB-A- 1 571 634
- US-A- 5 429 461
- US-A- 5 468 101

## Description

The present invention relates to a machine tool for machining elongate elements such as, for example, members for chairs, furniture or other such items.

More specifically, the present invention relates to a machine tool of the type comprising means for supporting and immobilizing the pieces or elements to be machined and an operating head, having at least one pair of tools and able to move relative to the support means along a vertical axis and along two horizontal axes and able to be made to move about two pivoting axes.

A machine of this type according to the preamble of claim 1 is, for example, described in EP-A-0873817. In one of the embodiments illustrated in that publication, the support means comprise two beams which define a support surface, with the distance between the two beams being set as a function of the dimensions of the pieces to be machined. Once the distance between the beams has been selected, they are locked in place before starting the cycle for machining the various pieces in succession. Even if several pieces are immobilized simultaneously on the support means, they are machined one after the other and not at the same time.

In a large number of applications, especially when producing constructional members for chairs, there is a need to machine symmetrical pieces.

From DE-A-4430113 a machine tool is known, where short axially symmetrical pieces can be machined at both ends. For this purpose, each workpiece is placed once on a turntable, machined and then transferred to the opposite turntable. The design of the machine is symmetrical, with a head carrying the tools movable in a space between the two turntables. The supports carrying the turntables are pivoting around a vertical pivoting axis for loading and unloading of the workjpieces. The two supports are movable to and fro, in order to transfer the workpiece from one turntable to the other without the workpiece having to leave the machine tool.

The object of the present invention is to provide a machine of the type mentioned above which enables symmetrical pieces or elements to be machined more rapidly.

A further object of the present invention is to provide a machine which enables handling of the pieces or elements to be machined to be simplified and machine costs to be reduced.

These and other objects and advantages, which will become clear to those skilled in the art on reading the text that follows, obtained with a machine according to claim 1. In essence, these objects are basically achieved with a machine tool comprising: at least one pair of tables for the elements to be machined and a bi-rotational operating head having at least one pair of tools and able to move relative to said pair of tables along an axis of vertical translation and along two axes of horizontal translation. Characteristically, the tables of said at least one pair are able to move relative to each other along a numerically controlled axis in order to allow symmetrical pieces or elements mounted on the tables to be machined simultaneously, with the operating head positioned between said two tables. This allows working times to be substantially reduced, especially in the chair manufacturing industry, where symmetrical machining is commonplace. The numerically controlled relative movement of the two tables makes it possible for a single pair of tools carried on the head to work on two opposing faces of two constructional members.

The controlled axis along which the relative movement between the two tables takes place may coincide with the axis of relative movement between the head and the tables. Alternatively, if the machine has more than one pair of tables, two numerically controlled axes will be provided parallel to each other and placed horizontally: the head moving along the first axis and one or both of the tables moving along the second axis.

The term "bi-rotational" is intended to mean an operating head that has numerically controlled rotational or pivoting movement about two axes of rotation, in particular two axes which are perpendicular to each other. This movement also allows the operating head to work on other faces of the two elements to be machined (mounted opposite each other on the two tables) as well as on the two opposing faces.

As will be evident from the following description, the relative movement of the two tables also allows simplification of the structure of the magazines and of the pieces or elements to be machined. This is because the magazines, together with their separating devices (i.e. the means responsible for feeding individual elements from the magazine to the worktable), and the chutes via which the pieces are discharged, can have a fixed position. The pieces are picked up from the magazines and discharged onto the discharge chutes by bringing the tables up to the magazines and the discharge chutes respectively. This results in a significant structural simplification, accompanied by a high degree of automation.

The translational movements along the horizontal and vertical axes between operating head and tables should be understood to be relative movements, in the sense that they can be executed by the head, by the tables or partly by the head and partly by the tables.

In one particularly advantageous embodiment, the two tables of the pair or of each pair are supported by a saddle which can move along one of said two axes of horizontal translation and is fitted with tracks which are parallel to the numerically controlled axis, along which said two tables can move with respect to each other, and perpendicular to the axis of horizontal translation, along which said saddle can move.

The operating head can be mounted on a slide that can move along the axis of vertical translation which extends along a fixed vertical upright. Alternatively, it would be advantageous for the vertical upright to be in turn able to move along an axis of horizontal translation so as to impart a horizontal translational movement to the operating head that could be combined with the relative movement between the two tables. This makes it possible to operate with two pairs of tables in an alternating cycle - i.e. with one pair of tables in the machining position and one pair of tables in the loading and discharge position. As will be clarified below with reference to one example of an embodiment, moreover, the fact that the operating head can move along its own axis of horizontal translation makes it possible, for each pair of tables, to have one table fixed on its saddle and the other table movable along the numerically controlled axis-which is parallel to the axis of horizontal translation of the upright supporting the operating head.

Alternatively, both the tables of the pair or of each pair could be movable with respect to a corresponding support saddle. However, both the tables must be able to move if the operating head does not have the possibility of itself moving autonomously in translation along a horizontal axis parallel to the movement executed by the two tables as they move closer together or further apart.

In practice, the operating head has at least one pair of coaxial tools. The possibility of providing more than two tools - for example four tools in a cross arrangement - in order to increase the machine's versatility, is not ruled out. Alternatively, it is possible for the head to carry two chucks having parallel axes, each of which supports two coaxial tools. This makes it possible to increase productivity in particular cases, as will be clarified below with reference to one embodiment example.

Other head configurations are not excluded: for example, two coaxial chucks with opposing tools instead of a single chuck with two coaxial tools. Complex combinations of the various configurations described above are also possible, depending on the requirements of the individual user.

The following text describes configurations in which the operating head is supported on a fixed upright or one which can move along a single horizontal axis, while movement along the second vertical axis is imparted to the workholding table or tables. However, the concept forming the basis of the invention also encompasses a machine in which the head is supported on an upright that can move along two numerically controlled horizontal axes, with one or two pairs of tables. In cases where only one pair of tables is provided, the upright may be able to move along a single horizontal axis, along two horizontal axes or it may be fixed, while the horizontal movement is imparted to the tables.

Additional advantageous embodiments of the invention are given in the appended dependent claims.

The invention will be better understood by following the description and the attached drawing which shows practical non-limiting embodiments of the invention. In particular, in the drawing:
Fig. 1 shows a front view of a machine according to the invention in a first embodiment;
Fig. 2 shows a front view similar to the view of Fig. 1 but with the tables supporting the elements to be machined in a different position;
Fig. 3 shows a plan view on the plane III-III in Fig. 1, with the tables in a loading position;
Fig. 4 shows a plan view similar to the view in Fig. 3 with the pieces in the machining position;
Fig. 5 shows a view on the plane V-V of Fig. 3;
Fig. 6 shows a view on VI-VI of Fig. 4;
Fig. 7 shows a front view similar to the view in Fig. 1 of a different embodiment; and
Figs 8 and 9 show a front view of two different modified embodiments of the machine according to the invention.

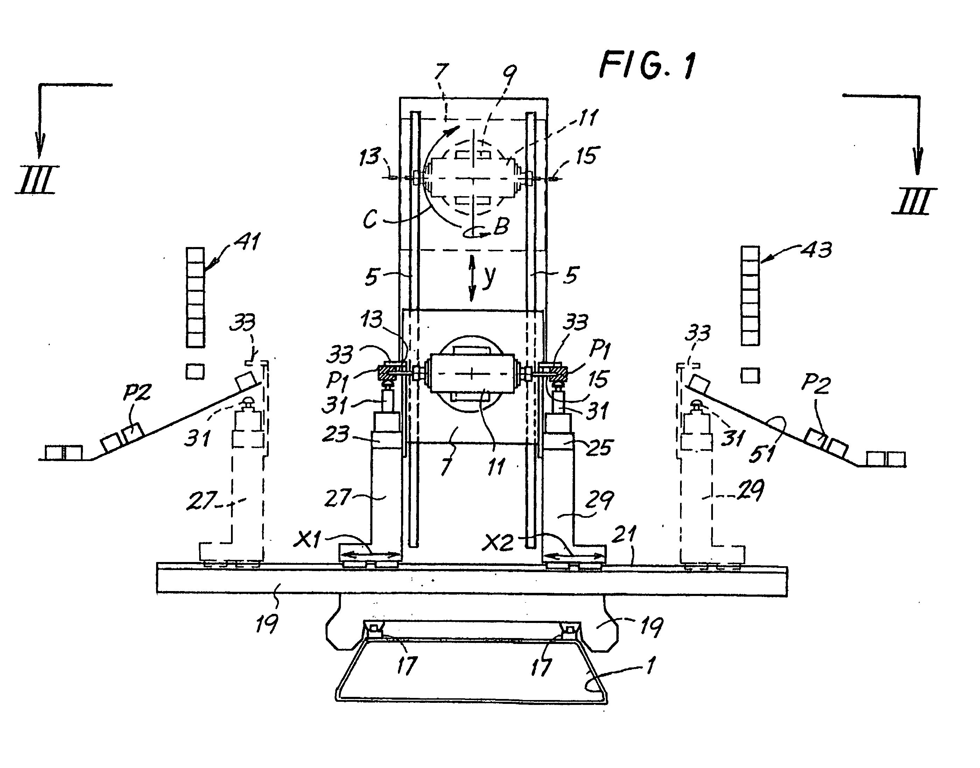

In the embodiment illustrated in Figs 1 to 6, the machine has a bed 1 which is integral with an upright 3 which carries a pair of vertical tracks 5 on which a slide 7 carrying an arm 9 for supporting an operating head 11 slides. The operating head 11 has a double chuck with two coaxial tools 13, 15. Y denotes a numerically controlled axis along which the operating head 11 is made to translate vertically along the tracks 5. The operating head 11 also has a numerically controlled double pivoting movement about the axes B and C.

A pair of horizontal tracks 17 along which a saddle 19 slides are provided on the bed 1. Z denotes the axis of translation of the saddle 19 along the tracks 17. Movement along the axis of horizontal translation Z is controlled by a programmable control unit in a similar way to the movement along the axis of vertical translation Y.

A pair of horizontal tracks 21, perpendicular to the tracks 17, are provided on the saddle 19. Two tables 23, 25 supported by corresponding uprights 27, 29 move in translation along the tracks 21. The movement of the tables 23 and 25 along the tracks 21 is controlled by the same control unit that manages the movement along the axes Y and Z. X1 and X2 denote the numerically controlled axes along which the tables 23 and 25 move in horizontal translation. The uprights 27 and 29 could be lower in height or could be omitted altogether, in which case the tables 23 and 25 would be adjacent to the saddle 19.

The tables 23 and 25 comprise means 31, 33 for immobilizing the pieces to be machined, the latter being given the general reference P1, and in the example illustrated these means consist of movable lower presser elements 31 which work in conjunction with fixed upper brackets 33. The pieces to be machined P1 may be components or other constructional members for making furniture such as chairs or the like.

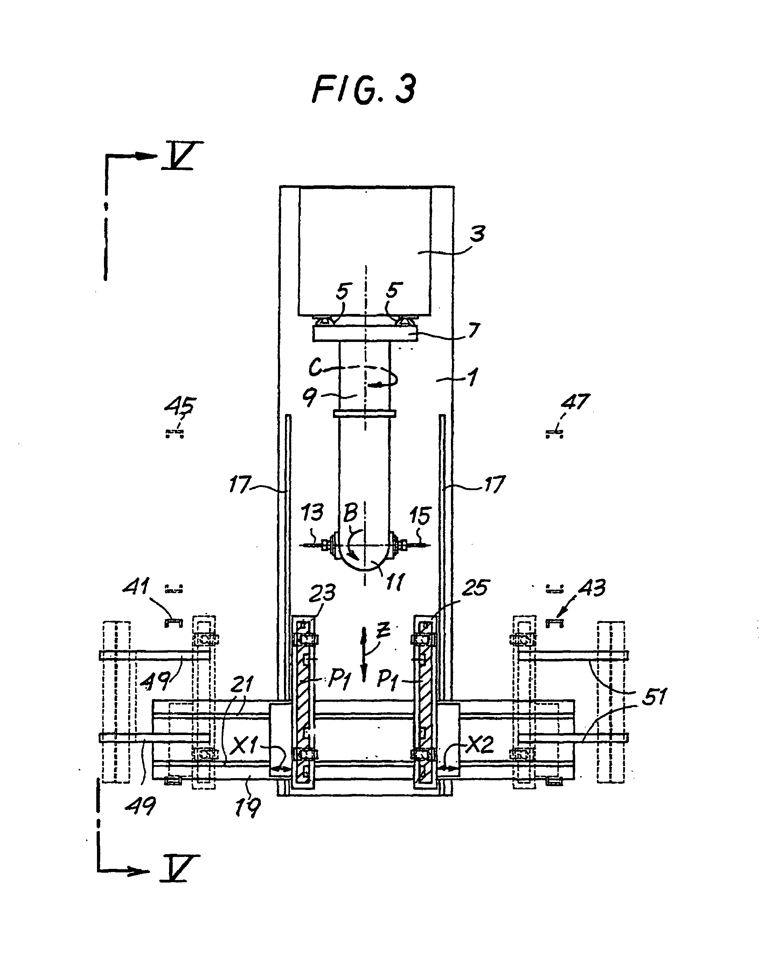

Figs 1 to 6 also diagrammatically show a pair of magazines 41, 43 of pieces waiting to be machined. The magazines 41 and 43 are located above the tables 23 and 25 and in a position set back with respect to the bed 1 along the direction of movement X1, X2 of the tables 23 and 25. In the plan view shown in Fig. 3 the magazines 41 and 43 are indicated solely by the profile of the guides in which the pieces to be machined are inserted. These magazines are known per se, as are the loading devices which feed individual pieces from the magazines to the immobilizing means carried by the tables 23 and 25. These systems will not, therefore, be described in greater detail in this document. An example of a magazine and of a corresponding loading device that can be adapted for use on the machine of the present invention is described in EP-A-0509972.

The plan view of Fig. 3 also shows the position of an optional additional pair of magazines 45, 47 of pieces to be machined.

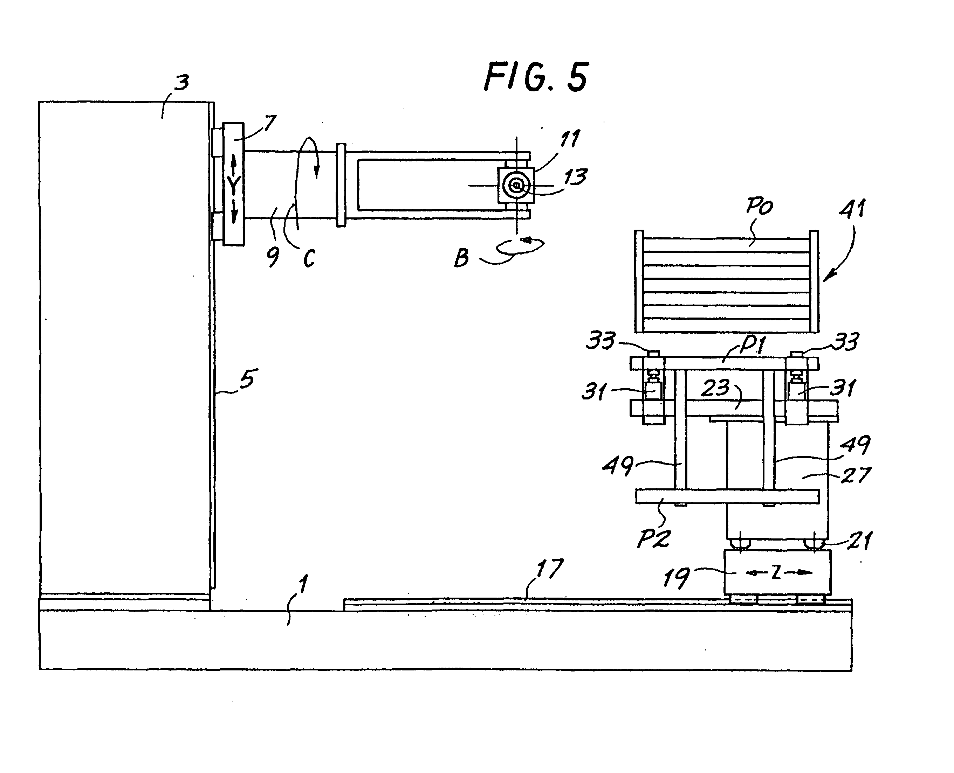

The references 49 and 51 diagrammatically denote the chutes via which the machined pieces are discharged from the tables 23 and 25. The reference P2 in Fig. 5 denotes a piece which has been machined and is now at the bottom of the discharge chute 49 awaiting removal, while P0 denotes the pieces still to be machined standing by in the magazine 41.

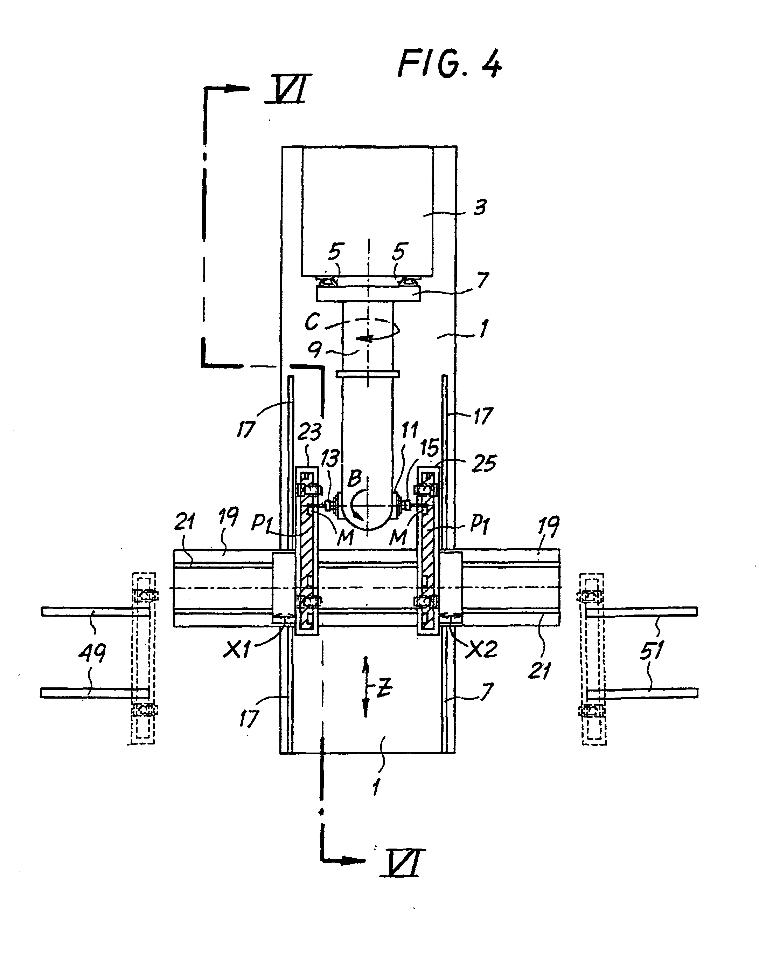

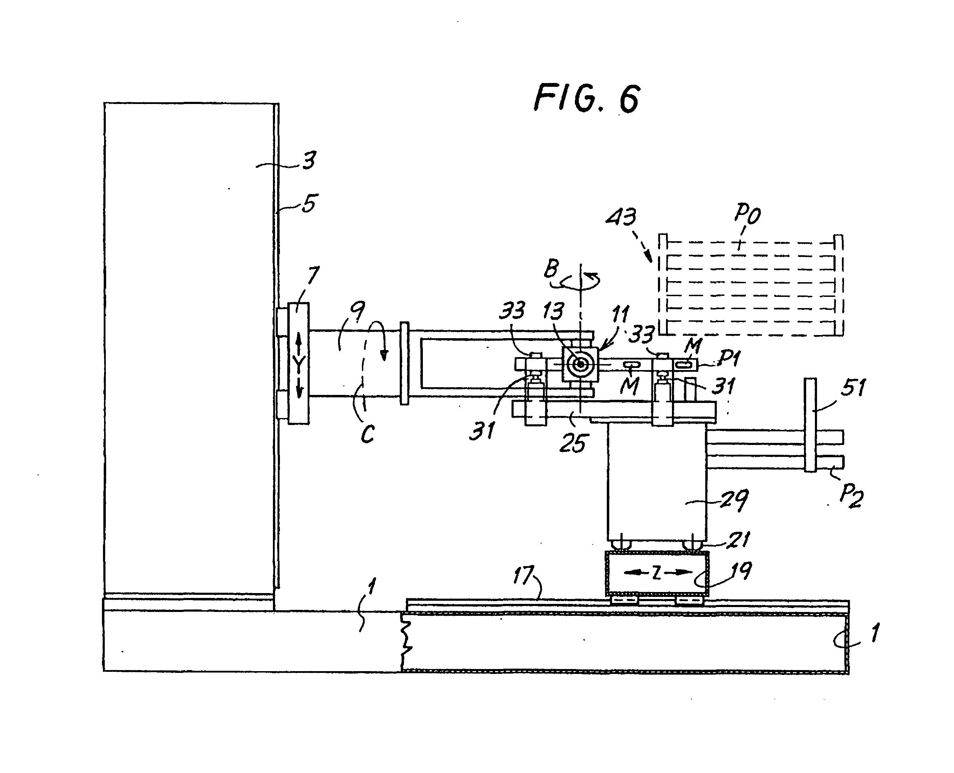

In the plan view of Fig. 3 and in the side view of Fig. 5, the tables supporting the pieces to be machined are in the vicinity of the magazines 41 and 43, while in the plan view of Fig. 4 and in the view of Fig. 6 the tables 23 and 25 are in the machining position, with the tools 13 and 15 engaged with the pieces to be machined P1.

In Fig. 1 the tables 23 and 25 are shown in solid lines in the machining position and in dashed lines in the discharge position, in which the machined pieces P2 are discharged onto the chutes 49 and 51. The operating head 11 and its corresponding slide 7 are shown in solid lines in the machining position and in dashed lines at their position of maximum height on the upright 3.

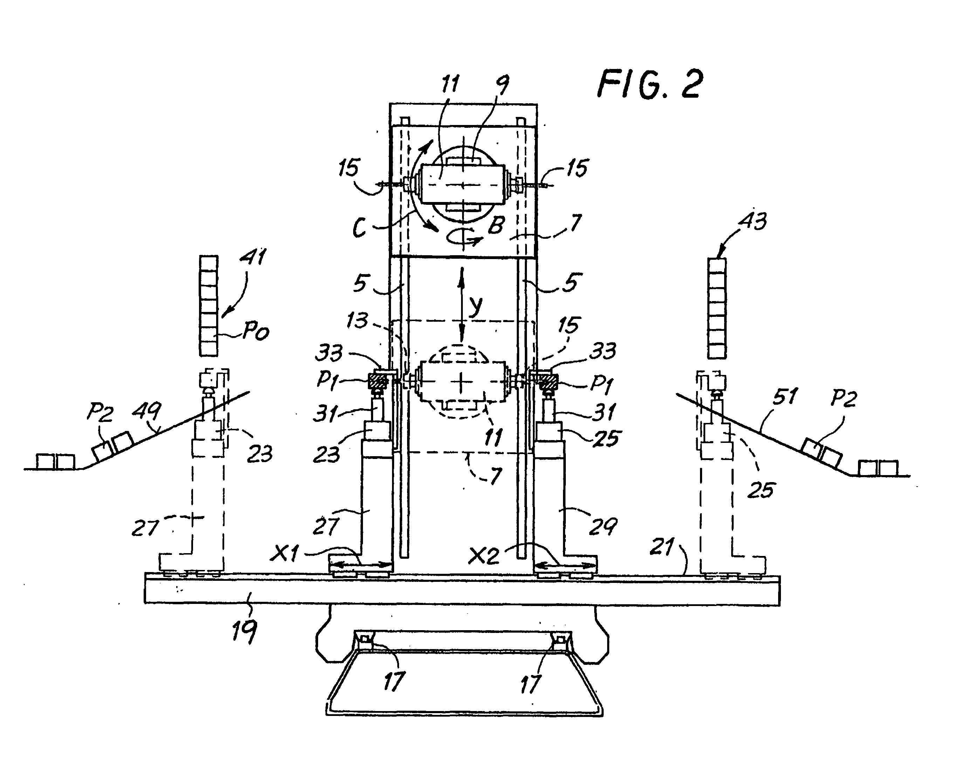

In Fig. 2 the position of the tables 23, 25 shown in dashed lines corresponds to the position in which the pieces to be machined P0 are loaded from the magazines 41, 43. The solid lines again denote the machining position of the tables 23 and 25, with the tools 13 and 15 engaged in the pieces being machined P1.

In the arrangement illustrated, the numerical control exerted along the axes X1 and X2 means that it is possible to work on two symmetrical pieces P1 simultaneously using a single head 11. The movement along the axes X1 and X2 can be controlled by a single actuator with a threaded bar having two portions with inverse threads. In that case, the movement is symmetrical and simultaneous for both tables 23 and 25 and for their corresponding uprights 27 and 29.

The operating cycle is as follows: the two tables 23 and 25 are moved along the axes X1 and X2 up to the magazines 41 and 43 (the position indicated by dashed lines in Fig. 2). Here, two pieces to be machined are immobilized in the position P1 on the two tables 23 and 25. Once the pieces have been loaded onto the tables 23 and 25 and immobilized on the latter, the saddle 19 is moved along the axis Z toward the vertical upright 3, moving from the position illustrated in Fig. 5 to the position illustrated in Fig. 6. The operating head 11 is moved in translation along the axis Y down to the height at which the pieces P1 are to be machined. The pieces P1 are then brought up to the tools 13 and 15 on the operating head by moving them closer together along the axes X1 and X2. By using numerical control to move the operating head 11 along the axis Y, the saddle 19 along the axis Z and the tables 23, 25 along the axes X1 and X2, the tools 13 and 15 are able to work symmetrically on the pieces P1, for example forming mortises such as those denoted M in Figs 4 and 6.

Once the pieces have been machined, the tables 23 and 25 are moved away from the tools 13 and 15 so that the latter can disengage from the machined pieces P1 and allow the saddle 19 to reverse along the axis Z and travel back toward the discharge chutes 49 and 51 onto which the machined pieces are then discharged. The movement of the tables 23 and 25 along the axes X1 and X2 enables the machined pieces to be brought up to the discharge chutes without having to move the latter.

Once the machined pieces have been discharged, a new operating cycle can commence.

Before the pieces are discharged the operating head 11 can work on other faces of the pieces P1. For this purpose it is advantageous to allow pivoting movements about the axes B and C. In order to make the machine more versatile, the operating head 11 can also have more than two tools - for example it can have four tools in a cross arrangement.

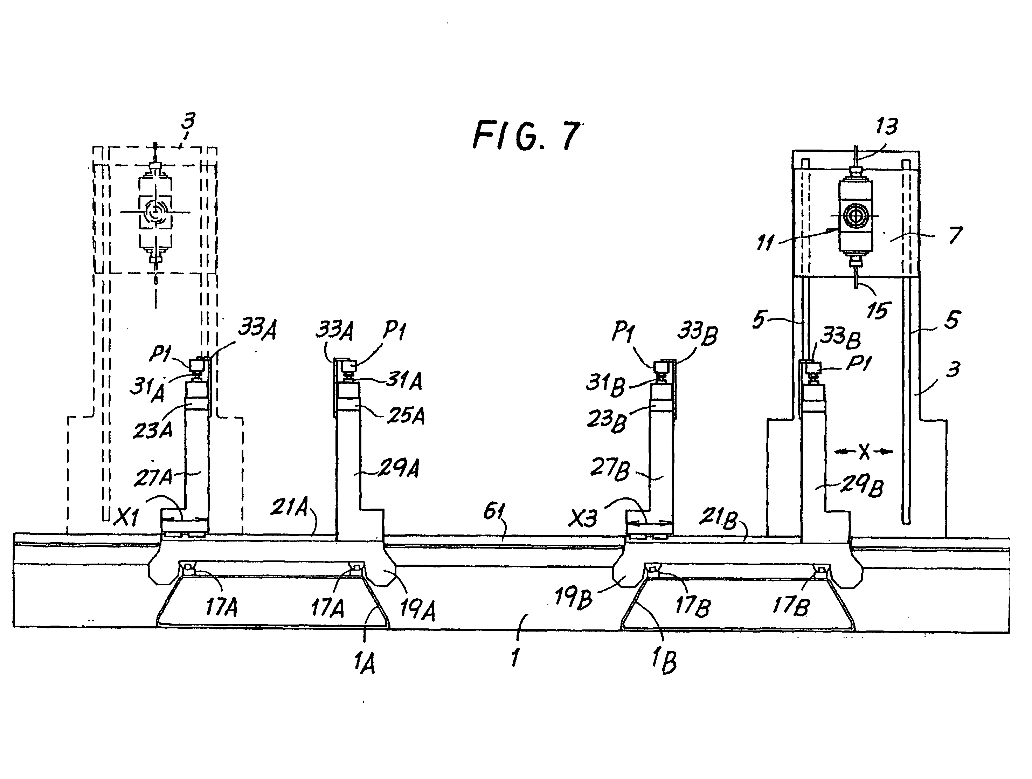

Fig. 7 shows a front view of an improved embodiment of the machine. In this case the upright 3 supporting the slide 7 and the operating head 11 is able to move along horizontal tracks 61 along a numerically controlled axis X. Furthermore, the bed 1 has two portions 1A and 1 B equipped with horizontal tracks 17A and 17B respectively. Two saddles 19A and 19B can move on these tracks along horizontal axes Z. Each saddle 19A, 19B has a similar arrangement to that of saddle 19 as described with reference to the preceding figures. The same reference numerals followed by the letter A or B denote parts identical or corresponding to those already described previously. X1 denotes the axis of horizontal translation of the table 23A, while X3 denotes the axis of horizontal translation of the table 23B. In the example illustrated the tables 25A and 25B are fixed with respect to their corresponding saddles 19A and 19B.

Operation of the devices provided on each individual saddle 19A, 19B is essentially analogous to that already described with reference to the embodiment of the previous figures, with the difference that the two saddles 19A and 19B operate in an alternating cycle, i.e. while one of the saddles is in the machining position corresponding to that shown in Fig. 4, the other is in the loading or discharging position corresponding to that shown in Fig. 3. The upright 3 moves in translation along the tracks 61 along the axis of horizontal translation X so as to approach one or other of the portions 1A, 1 B of the bed 1 and thus work on the pieces supported by the tables 23A, 25A or 23B, 25B alternately. The ability of the upright 3 to move along the horizontal axis X, parallel to the tracks 21 A, 21 B, makes it possible for one of the tables 23, 25 to be fixed while the other can move relative to its corresponding saddle 19, as in the example illustrated. The option of allowing each table of each pair to move in translation along the corresponding saddle 19 is not excluded.

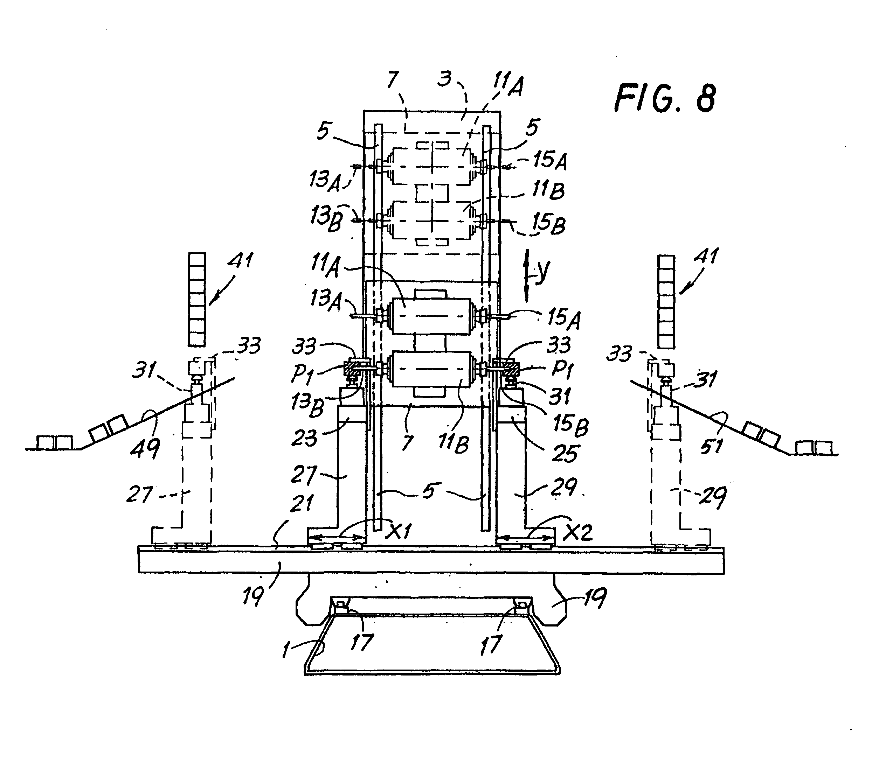

Fig. 8 shows an embodiment which has been modified with respect to the embodiment shown in Figs 1 to 6. Identical reference numerals denote parts identical or corresponding to those of Figs 1 to 6. Compared to the embodiment shown in Figs 1 to 6, Fig. 8 illustrates a double operating head with two chucks 11A, 11 B having parallel axes. Each chuck 11 A, 11 B carries a pair of coaxial tools, denoted 13A, 15A and 13B, 15B respectively. This configuration also allows the ends and the upper faces of the pair of pieces P1 to be machined simultaneously. In order to do this it is sufficient to move the operating head away from the area between the two pieces P1, bring the two pieces closer together by moving the tables 23 and 25 along X1 and X2 until the two pieces are at a distance equal to the distance I between the axes of the chucks and then bring the chucks down to the pieces to be machined.

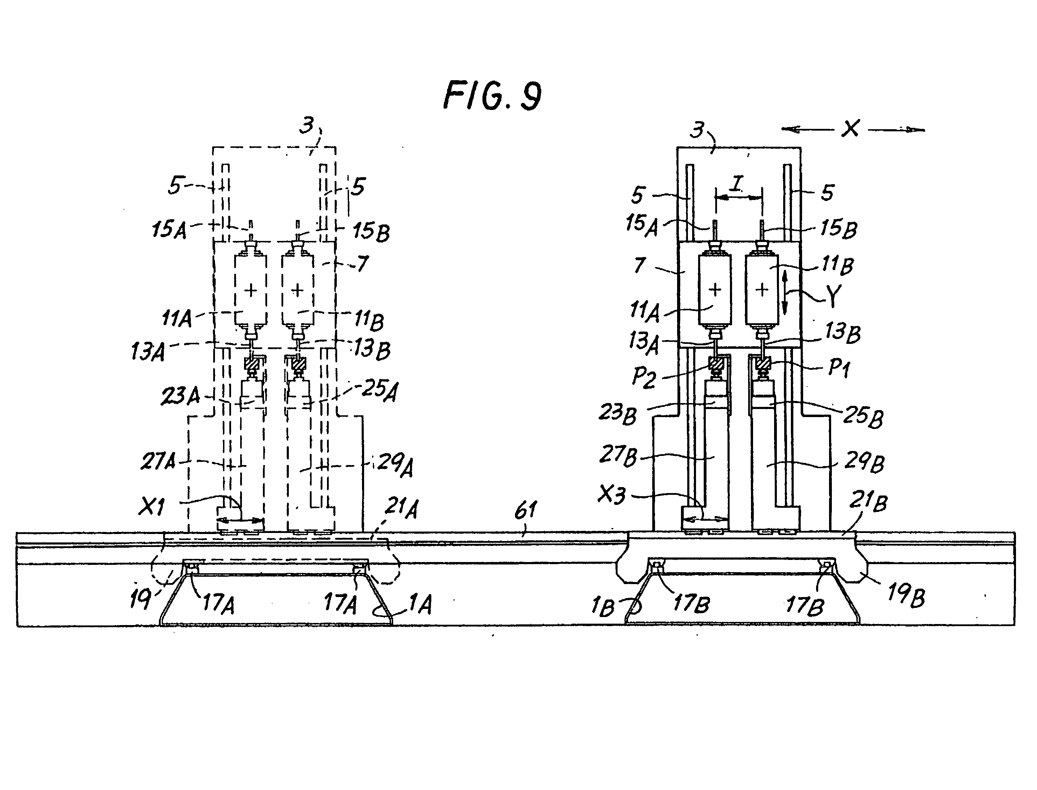

Fig. 9 shows an arrangement with a double chuck similar to that shown in Fig. 8 but applied to an embodiment of a machine having two pairs of tables, of the type illustrated in Fig. 7. The same reference numerals denote parts identical to those in Fig. 7 and Fig. 8. The dashed lines denote the pair of tables on the left (looking at the figure) and their saddle which are inactive. The dashed lines also denote the position assumed by the upright 3 when working on the pieces fixed to the pair of tables which are temporarily inactive. The solid lines denote the upright with the operating head in the position assumed to work on the pieces mounted on the pair of tables on the right.

In this stage the operating head is working simultaneously on the upper surfaces of the two pieces via the tools 13A, 13B. The two tables 23B, 25B have been brought closer together by moving them both along the axes X3 until they are at a distance equal to the distance I between the axes of the two chucks 11 A, 11 B of the operating head.

It should be understood that the drawing shows only one possible embodiment of the invention, the forms and arrangements of which may vary without thereby departing from the basic concept of said invention. The presence of any reference numerals in the appended claims has the sole purpose of facilitating the reading thereof in the light of the preceding description and of the appended drawings and does not limit the scope of protection thereof.

## Claims

1. A machine tool for machining constructional members for furniture and the like, comprising: at least one pair of tables (23, 25; 23A, 25A, 23B, 25B) for the elements to be machined and an operating head (11) having at least one pair of tools (13, 15), said pair of tools and said pair of tables being mutually movable with respect to one another along an axis of vertical translation (Y) and along two axes of horizontal translation (X1, X2, Z; X1, X, Z; X3, X, Z), said operating head being able to move about two numerically controlled pivoting axes (A, B), **characterized in that** the tables (23, 25; 23A, 25A; 23B, 25B) of said pair are able to move relative to each other along a numerically controlled axis (X1, X2; X1, X3), said numerically controlled axes being designed to allow symmetrical constructional elements mounted on said tables to be machined simultaneously, with the operating head positioned between said two tables.

2. Machine as claimed in claim 1, **characterized in that** the two tables (23, 25; 23A, 25A; 23B, 25B) of said at least one pair are supported by a saddle (19; 19A; 19B) which can move along one (Z) of said two axes of horizontal translation and is fitted with tracks (21; 21 A; 21 B) which are parallel to the numerically controlled axis, along which said two tables can move with respect to each other, and perpendicular to the axis (Z) of horizontal translation, along which said saddle can move.

3. Machine as claimed in claim 2, **characterized in that** said operating head can move autonomously along its own axis of horizontal translation (X) parallel to the numerically controlled axis (X1; X3) along which said tables move relative to each other.

4. Machine as claimed in claim 2 or 3, **characterized in that** both said tables can move along the tracks (21) carried by said saddle (19).

5. Machine as claimed in claim 3, **characterized in that** one table (25A; 25B) of said at least one pair is fixed with respect to said saddle (19A; 19B) and the other table can move along said numerically controlled axis.

6. Machine as claimed in one or more of the preceding claims, **characterized in that** said operating head has at least one pair of coaxial tools (13, 15).

7. Machine as claimed in claim 3, **characterized in that** it comprises two pairs of said tables (23A; 25A; 23B, 25B) which operate in an alternating cycle.

8. Machine as claimed in claim 7, **characterized in that** said operating head (11) is supported on an upright (3) which can move along one (X) of said axes of horizontal translation so that it is located in the vicinity of one or other of said two pairs of tables.

9. Machine as claimed in one or more of the preceding claims, **characterized in that** it comprises, for each of said tables, a magazine of elements to be machined and means of feeding individual elements to be machined to said tables.

10. Machine as claimed in claim 9, **characterized in that** said magazines are in a fixed position and **in that** said tables are brought up to and moved away from the magazines in order to load the elements to be machined.

11. Machine as claimed in one or more of the preceding claims, **characterized in that** said two tables are supported on vertical uprights (27, 29; 27A, 29A; 278, 29B).

12. Machine as claimed in one or more of the preceding claims, **characterized in that** said operating head comprises two chucks (11A, 11 B) having parallel axes, each of which is fitted with two coaxial tools (13A, 15A; 13B, 15B).

## Patentansprüche

1. Werkzeugmaschine zum Bearbeiten von Bauteilen für Möbel und dgl. umfassend: mindestens ein Paar von Tischen (23, 25; 23A, 25A, 23B, 25B) für die zu bearbeitenden Elemente und einen Arbeitskopf (11) mit mindestens einem Paar von Werkzeugen (13, 15), wobei das Paar von Werkzeugen und das Paar von Tischen gegenseitig relativ zueinander beweglich sind längs einer vertikalen Verschiebungsachse (Y) und zwei horizontalen Verschiebungsachsen (X1, X2, Z; X1, X, Z; X3, X, Z), wobei der Arbeitskopf und zwei numerisch gesteuerte Schwenkachsen (A, B) bewegbar ist,
**dadurch gekennzeichnet, dass** die Tische (23, 25; 23A, 25A, 23B, 25B) des Paares relativ zueinander längs einer numerisch gesteuerten Achse (X1, X2; X1, X3) bewegbar sind, wobei die numerisch gesteuerten Achsen so ausgelegt sind, dass sie es ermöglichen, symmetrische Konstruktionsteile, die auf den Tischen montiert sind, gleichzeitig zu bearbeiten, wobei der Arbeitskopf zwischen den beiden Tischen angeordnet ist.

2. Maschine nach Anspruch 1, **dadurch gekennzeichnet, dass** die zwei Tische (23, 25; 23A, 25A, 23B, 25B) des mindestens einen Paares durch einen Sattel (19, 19A; 19B) abgestützt sind, der sich längs einer (Z) der beiden horizontalen Verschiebungsachsen bewegen kann und mit Schienen (21; 21A; 21B) versehen ist, die parallel zu der numerisch gesteuerten Achse, längs der die beiden Tische sich relativ zueinander bewegen können, und rechtwinklig zu der horizontalen Verschiebungsachse (Z), längs der sich der Sattel bewegen kann, sind.

3. Maschine nach Anspruch 2, **dadurch gekennzeichnet, dass** der Arbeitskopf sich autonom bewegen kann längs einer eigenen horizontalen Verschiebungsachse (X) parallel zu den numerisch gesteuerten Achsen (X1; X3), längs derer sich die Tische relativ zueinander bewegen.

4. Maschine nach Anspruch 2 oder 3, **dadurch gekennzeichnet, dass** beide Tische sich längs der von dem Sattel (19) getragenen Schienen (21) bewegen können.

5. Maschine nach Anspruch 3, **dadurch gekennzeichnet, dass** ein Tisch (25A; 25B) des mindestens einen Paares bezüglich des Sattels (19A; 19B) feststehend ist und der andere Tisch sich längs der numerisch gesteuerten Achse bewegen kann.

6. Maschine nach einem oder mehreren der vorangehenden Ansprüche, **dadurch gekennzeichnet, dass** der Arbeitskopf mindestens ein Paar von koaxialen Werkzeugen (13, 15) aufweist.

7. Maschine nach Anspruch 3, **dadurch gekennzeichnet, dass** sie zwei Paare von Tischen (23, 25; 23A, 25A, 23B, 25B) umfasst, die in einem alternierenden Zyklus arbeiten.

8. Maschine nach Anspruch 7, **dadurch gekennzeichnet, dass** der Arbeitskopf (11) auf einem Ständer (3) abgestützt ist, der sich längs einer (X) der horizontalen Verschiebungsachsen bewegen kann, sodass er in der Nähe des einen oder anderen der beiden Paare von Tischen positioniert ist.

9. Maschine nach einem oder mehreren vorangehenden Ansprüche, **dadurch gekennzeichnet, dass** sie für jeden der Tische ein Magazin für zu bearbeitende Elemente und Mittel aufweist, um einzelne, zu bearbeitende Elemente zu den Tischen zuzuführen.

10. Maschine nach Anspruch 9, **dadurch gekennzeichnet, dass** die Magazine in einer ortsfesten Position sind und dass die Tische an die Magazine herangefahren und von ihnen wegbewegt werden, um die zu bearbeitenden Elemente zu laden.

11. Maschine nach einem oder mehreren der vorangehenden Ansprüche, **dadurch gekennzeichnet, dass** die beiden Tische auf vertikalen Ständern (27, 29; 27A, 29A, 27B, 29B) abgestützt sind.

12. Maschine nach einem oder mehreren der vorangehenden Ansprüche, **dadurch gekennzeichnet, dass** der Arbeitskopf (2) Futter (11A, 11B) mit parallelen Achsen aufweist, von denen jedes mit zwei koaxialen Werkzeugen (13A, 15A; 13B, 15B) bestückt ist.

## Revendications

1. Machine-outil pour usiner des éléments de construction pour meubles et similaires, comprenant : au moins une paire de tables (23, 25 ; 23A, 25A, 23B, 25B) pour les éléments à usiner et une tête opérationnelle (11) ayant au moins une paire d'outils (13, 15), ladite paire d'outils et ladite paire de tables étant mutuellement mobiles l'une par rapport à l'autre le long d'un axe de translation verticale (Y) et le long de deux axes de translation horizontale (X1, X2, Z ; X1, X, Z ; X3, X, Z), ladite tête opérationnelle étant capable de se déplacer autour de deux axes de pivotement commandés numériquement (A, B), **caractérisée en ce que** les tables (23, 25 ; 23A, 25A, 23B, 25B) de ladite paire sont capables de se déplacer l'une par rapport à l'autre le long d'un axe commandé numériquement (X1, X2 ; X1, X3), lesdits axes commandés numériquement étant conçus pour permettre à des éléments de construction symétriques montés sur lesdites tables d'êtres usinés simultanément, la tête opérationnelle étant positionnée entre lesdites deux tables.

2. Machine selon la revendication 1, **caractérisée en ce que** les deux tables (23, 25 ; 23A, 25A ; 23B, 25B) de ladite au moins une paire sont soutenues par une banc coulissant (19 ; 19A ; 19B) qui peut se déplacer le long d'un axe (Z) desdits deux axes de translation horizontale et qui est muni de rails (21 ; 21A ; 21B) qui sont parallèles à l'axe commandé numériquement, le long duquel lesdites deux tables peuvent se déplacer l'une par rapport à l'autre, et perpendiculairement à l'axe (Z) de translation horizontale, le long duquel ledit banc peut se déplacer.

3. Machine selon la revendication 2, **caractérisée en ce que** ladite tête opérationnelle peut se déplacer de manière autonome le long de son propre axe de translation horizontale (X) parallèle à l'axe commandé numériquement (X1 ; X3) le long duquel lesdites tables se déplacent l'une par rapport à l'autre.

4. Machine selon la revendication 2 ou 3, **caractérisée en ce que** les deux dites tables peuvent se déplacer le long des rails (21) portés par ledit banc (19).

5. Machine selon la revendication 3, **caractérisée en ce qu'**une table (25A ; 25B) de ladite au moins une paire est fixée par rapport audit banc (19A ; 19B) et l'autre table peut se déplacer le long dudit axe commandé numériquement.

6. Machine selon une ou plusieurs des revendications précédentes, **caractérisée en ce que** ladite tête opérationnelle a au moins une paire d'outils coaxiaux (13, 15).

7. Machine selon la revendication 3, **caractérisée en ce qu'**elle comprend deux paires desdites tables (23A ; 25A ; 23B ; 25B) qui fonctionnent en un cycle alternatif.

8. Machine selon la revendication 7, **caractérisée en ce que** la tête opérationnelle (11) est soutenue sur un montant (3) qui peut se déplacer le long d'un axe desdits axes (X) de translation horizontale de sorte qu'elle soit située à proximité de l'une ou l'autre desdites deux paires de tables.

9. Machine selon une ou plusieurs des revendications précédentes, **caractérisée en ce qu'**elle comprend, pour chacune desdites tables, un magasin d'éléments à usiner et des moyens pour fournir des éléments individuels à usiner auxdites tables.

10. Machine selon la revendication 9, **caractérisée en ce que** lesdits magasins sont dans une position fixe et **en ce que** lesdites tables sont amenées jusqu'aux magasins et éloignées de ceux-ci afin de charger les éléments à usiner.

11. Machine selon une ou plusieurs des revendications précédentes, **caractérisée en ce que** lesdites deux tables sont soutenues sur des montants verticaux (27, 29 ; 27A, 29A ; 27B, 29B).

12. Machine selon une ou plusieurs des revendications précédentes, **caractérisée en ce que** ladite tête opérationnelle comprend deux mandrins (11A, 11B) ayant des axes parallèles, dont chacun est muni de deux outils coaxiaux (13A, 15A ; 13B, 15B).
